# EUROPEAN PATENT SPECIFICATION

(11) **EP 4 075 312 B1**
(45) Date of publication and mention of the grant of the patent: **20.05.2026**
(21) Application number: 22166132.5
(22) Date of filing: 31.03.2022
(51) Int. Cl.: G06F 21/60, G06F 3/12, H04N 1/00

(54) **ELECTRONIC DEVICE, SYSTEM, METHOD OF PROCESSING INFORMATION, AND CARRIER MEANS**
ELEKTRONISCHE VORRICHTUNG, SYSTEM, VERFAHREN ZUR INFORMATIONSVERARBEITUNG UND TRÄGERMITTEL
DISPOSITIF ÉLECTRONIQUE, SYSTÈME, PROCÉDÉ DE TRAITEMENT D'INFORMATIONS ET SUPPORT

(30) Priority: 13.04.2021 JP 2021067474
(43) Date of publication of application: 19.10.2022
(73) Proprietor: Ricoh Company, Ltd., Tokyo 143-8555 (JP)
(72) Inventor: NAYA, Wataru, Tokyo, 143-8555 (JP)
(74) Representative: Marks & Clerk LLP

(56) References cited:
- US-A1- 2014 355 034
- US-A1- 2015 070 724
- US-A1- 2015 378 649

## Description

### BACKGROUND

### Technical Field

The present disclosure relates to an electronic device, a system, a method of processing information, and carrier means.

### Description of the Related Art

For example, a technique is known for permitting a user to use functions of an electronic device including one or more functions, such as an image forming apparatus, within a preset range of use privileges.

Also known is an image forming apparatus that permits a user having no privilege to use a certain function to use the function when the function is used under predetermined use conditions (see, for example, JP-2009-087319-A).

In the technique disclosed in JP-2009-087319-A, in response to a new function being added to the electronic device, an administrator or the like sets the privilege to use the added function. US 2015/0070724 A1 discloses an information processing system including an information processing apparatus including a first computer program and one or more electronic apparatuses including a second computer program. US 2014/0355034 A1 discloses an image forming apparatus including first and second token request transmission units, first and second token reception units, a storage unit, and a device resource request transmission unit. US 2015/0378649 A2 discloses a device installation information distributing apparatus including a distribution request acquirer configured to acquire a request to distribute device installation information.

### SUMMARY

An electronic device is proposed as defined by claim 1, and a method of processing information is proposed as defined by claim 9.

An electronic device according to an embodiment of the present disclosure includes one or more functions. The electronic device includes a storage unit that stores privilege information related to the one or more functions, and a management unit that, in response to addition of an additional function to the electronic device, sets privilege information of the additional function, based on setting information and the privilege information related to the one or more functions, the setting information being information indicating a correspondence relationship between the privilege information related to the one or more functions and privilege information related to the additional function.

A system according to an embodiment of the present disclosure includes the electronic device described above; and a management server that communicates with the electronic device via a network. The management server includes a setting information providing unit that provides the setting information to the electronic device.

A method of processing information according to an embodiment of the present disclosure is performed by an electronic device including one or more functions. The setting management method includes storing, in a memory, privilege information related to the one or more functions; and in response to installation of an addition program for adding an additional function to the electronic device, setting privilege information of the additional function, based on setting information and the privilege information related to the one or more functions, the setting information being information indicating a correspondence relationship between the privilege information related to the one or more functions and privilege information related to the additional function.

Carrier means according to an embodiment of the present disclosure carries a computer readable code for controlling a computer system to carry out the method described above.

One or more embodiments of the present disclosure facilitates setting of the privilege to use a new function in response to the function being added to an electronic device including one or more functions.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example system configuration of a setting management system according to an embodiment;
FIGs. 2A and 2B illustrate an overview of a setting management process according to an embodiment;
FIG. 3 is a diagram illustrating an example hardware configuration of a computer according to an embodiment;
FIG. 4 is a diagram illustrating an example hardware configuration of an image forming apparatus according to an embodiment;
FIG. 5 is a diagram illustrating an example functional configuration of the image forming apparatus according to the embodiment;
FIG. 6 illustrates an example of user information according to an embodiment;
FIGs. 7A and 7B illustrate an example of setting information according to an embodiment;
FIG. 8 is a flowchart illustrating an example process for setting privilege information according to a first embodiment;
FIG. 9 is a flowchart illustrating another example process for setting privilege information according to the first embodiment;
FIGs. 10A and 10B illustrate an example of display screens after addition of a function according to the first embodiment;
FIG. 11 is a diagram illustrating an example functional configuration of a setting management system according to a second embodiment;
FIG. 12 illustrates an image of a setting information management database (DB) according to the second embodiment;
FIG. 13 is a flowchart illustrating an example process for setting privilege information according to the second embodiment; and
FIG. 14 is a sequence diagram illustrating an example process for acquiring setting information according to the second embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

One or more embodiments of the present disclosure will be described hereinafter with reference to the drawings.

### System Configuration

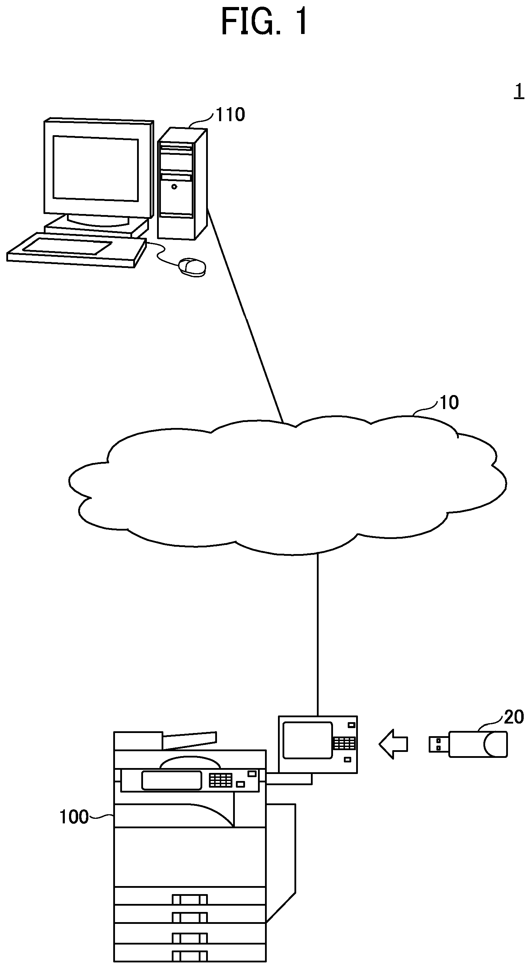

FIG. 1 is a diagram illustrating an example system configuration of a setting management system 1 according to an embodiment. In the example illustrated in FIG. 1, the setting management system 1 includes an image forming apparatus 100 and a management server 110, which are communicably connected to each other via a communication network 10 such as the Internet or a local area network (LAN).

The image forming apparatus 100 is, for example, a multifunction peripheral (MFP) having functions such as printer, scanner, copier, and facsimile functions, or an electronic device having one or more image forming functions such as a printer, scanner, or copier function. The image forming apparatus 100 is an example of an electronic device including one or more functions. The electronic device including one or more functions is not limited to the image forming apparatus 100 and may be any other electronic device having a communication function. For example, the electronic device including one or more functions may be an output device such as a projector (PJ), an interactive white board (IWB) capable of mutual communication, or a digital signage. Alternatively, the electronic device including one or more functions may be, for example, but not limited to, a head up display (HUD) device, an industrial machine, an imaging device, a sound collection device, a medical device, a network home appliance, or an automobile (connected car). In the following description, as an example, the electronic device including one or more functions is the image forming apparatus 100.

The image forming apparatus 100 stores and manages privilege information related to one or more functions of the image forming apparatus 100 in a storage unit or the like.

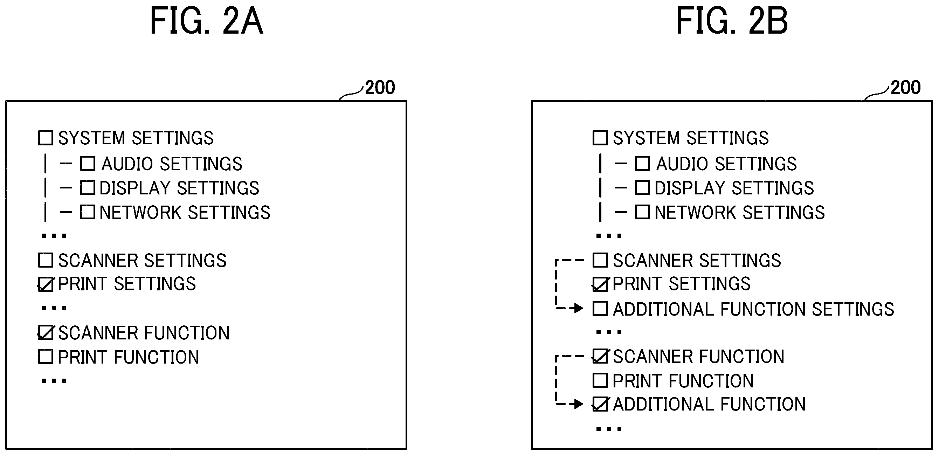

FIG. 2A illustrates an example of settings of privilege information 200 managed by the image forming apparatus 100. In the example illustrated in FIG. 2A, the privilege information 200 includes a list of functions of the image forming apparatus 100 and information indicating whether the privilege to use each function is given. For example, in FIG. 2A, the "scanner function" and the "print function" indicate that the image forming apparatus 100 has a scanner function and a print function. A checkbox corresponding to each function indicates whether the use privilege to use the function is given, and the checkbox corresponding to a function for which the use privilege is given is checked (selected). For example, the privilege information 200 illustrated in FIG. 2A indicates that the user or the like has the use privilege to use the scanner function and does not have the use privilege to use the print function.

The privilege information 200 also includes information indicating whether the privilege to set the functions of the image forming apparatus 100. For example, the privilege information 200 illustrated in FIG. 2A indicates that the user or the like does not have the setting privilege to set the scanner function because the checkbox corresponding to the "scanner settings" is not checked (selected). The privilege information 200 illustrated in FIG. 2A also indicates that the user or the like has the setting privilege to set the print function because the checkbox corresponding to the "print settings" is checked (selected).

The privilege information 200 may include, in addition to the privilege to set the image forming functions such as the scanner function and the print function, information indicating the presence or absence of the privilege to set, for example, system settings such as "audio settings", "display settings", or "network settings". The format of the privilege information 200 illustrated in FIG. 2A is an example for description, and the privilege information 200 may have any format.

In one example, the image forming apparatus 100 is capable of creating a plurality of groups and managing the privilege information 200 for each group. Further, the image forming apparatus 100 is configured to assign a group to a user who manages or uses the image forming apparatus 100, and apply the privilege information of the group assigned to the user upon the login of the user to the image forming apparatus 100.

When a new function is added to the image forming apparatus 100 having the configuration described above, the administrator or the like sets the privilege information 200 for the added function, which takes time and labor. In addition, it is difficult to restrict the use of the added function by the user until the administrator or the like sets the privilege information 200.

Accordingly, in the setting management system 1 according to this embodiment, the image forming apparatus 100 has a function of automatically setting privilege information related to an additional function in response to installation of an addition program for adding a function to the image forming apparatus 100.

For example, in response to installation of an addition program for adding an additional function to the image forming apparatus 100, the image forming apparatus 100 acquires setting information from the addition program or from an installer of the addition program. Alternatively, the image forming apparatus 100 may acquire setting information from an external device such as the management server 110, a cloud service, or the like in response to addition of an additional function to the image forming apparatus 100.

The setting information includes, for example, information indicating a correspondence relationship between the privilege information 200 related to one or more functions of the image forming apparatus 100, as illustrated in FIG. 2A, and privilege information related to the additional function. For example, the setting information includes information indicating to which function setting privilege among the privileges to set the one or more functions of the image forming apparatus 100 the privilege to set the additional function corresponds. The setting information also includes information indicating to which function use privilege among the privileges to use the one or more functions of the image forming apparatus 100 the privilege to use the additional function corresponds.

The image forming apparatus 100 also has a function of setting privilege information related to the additional function using the acquired setting information and the privilege information 200 related to the one or more functions of the image forming apparatus 100. For example, when the setting information includes information indicating that the privilege to set the additional function corresponds to the "scanner settings", as illustrated in FIG. 2B, the image forming apparatus 100 applies the privilege to set the "scanner settings" to the privilege to set the "additional function settings". When the setting information includes information indicating that the privilege to use the additional function corresponds to the "scanner function", as illustrated in FIG. 2B, the image forming apparatus 100 applies the privilege to use the "scanner function" to the privilege to use the "additional function". Accordingly, in response to a new function being added to the image forming apparatus 100, the image forming apparatus 100 can set privilege information of the additional function without causing the administrator or the like to set the privilege information 200 for the added function.

The management server 110 is, for example, an information processing apparatus having the configuration of a computer or a system including a plurality of computers. For example, the management server 110 stores setting information corresponding to an additional function to be added to the image forming apparatus 100, and provides the setting information in response to a request from an electronic device such as the image forming apparatus 100.

Alternatively, the management server 110 may store an addition program for adding an additional function to an electronic device such as the image forming apparatus 100, and provide the addition program in response to a request from the electronic device such as the image forming apparatus 100.

The addition program is, for example, an application program (hereinafter referred to as "application") to be added to the image forming apparatus 100, and is installed into the image forming apparatus 100 by execution of an installer stored in the management server 110, an external memory 20 (see FIG. 1), or the like. However, this is an example, and the addition program may be, for example, a plug-in for the image forming apparatus 100 or firmware or the like for updating the functions of the image forming apparatus 100.

The system configuration of the setting management system 1 illustrated in FIG. 1 is an example. As described above, for example, the image forming apparatus 100 may be any other electronic device having a communication function. When the setting management system 1 includes a plurality of image forming apparatuses 100, one or more image forming apparatuses 100 among the plurality of image forming apparatuses 100 may have the functions of the management server 110. The functions of the management server 110 may be implemented by a cloud service or the like external to the setting management system 1.

As described above, this embodiment facilitates setting of the privilege to use a new function in response to the function being added to an electronic device including one or more functions.

### Hardware Configuration

### Hardware Configuration of Computer

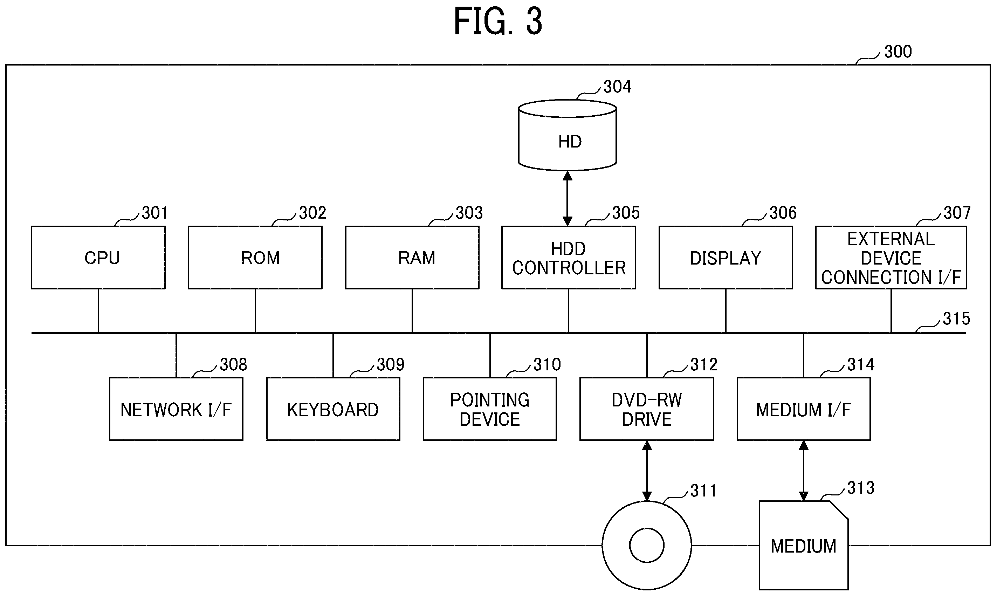

The management server 110 has, for example, the hardware configuration of a computer 300 illustrated in FIG. 3. Alternatively, the management server 110 is constituted by a plurality of computers 300.

FIG. 3 is a diagram illustrating an example hardware configuration of a computer according to an embodiment. For example, as illustrated in FIG. 3, the computer 300 includes a central processing unit (CPU) 301, a read only memory (ROM) 302, a random access memory (RAM) 303, a hard disk (HD) 304, a hard disk drive (HDD) controller 305, a display 306, an external device connection interface (I/F) 307, a network I/F 308, a keyboard 309, a pointing device 310, a digital versatile disc rewritable (DVD-RW) drive 312, a medium I/F 314, and a bus line 315.

The CPU 301 controls the overall operation of the computer 300. The ROM 302 stores a program used for activating the computer 300, such as an initial program loader (IPL). The RAM 303 is used as a work area for the CPU 301, for example. The HD 304 stores, for example, programs such as an operating system (OS), an application, and a device driver, and various data. The HDD controller 305 controls, for example, reading or writing of various data from or to the HD 304 under the control of the CPU 301.

The display 306 displays various types of information such as a cursor, a menu, a window, text, or an image, for example. The display 306 may be disposed outside the computer 300. The external device connection I/F 307 is an interface for connecting an external device such as the external memory 20. The network I/F 308 is an interface for performing data communication using a communication network.

The keyboard 309 is a type of input device provided with a plurality of keys for entering text, numerical values, or various instructions, for example. The pointing device 310 is a type of input device for selecting or executing various instructions, selecting a target for processing, or moving the cursor being displayed, for example. The keyboard 309 and the pointing device 310 may be disposed outside the computer 300.

The DVD-RW drive 312 controls reading or writing of various data from or to a DVD-RW 311, which is an example of a removable recording medium. The removable recording medium is not limited to the DVD-RW 311 and may be a digital versatile disc recordable (DVD-R) or the like. The medium I/F 314 controls reading or writing (storing) of data from or to a medium 313 such as a flash memory. The bus line 315 includes an address bus, a data bus, various control signals, and the like for electrically connecting the components described above.

### Hardware Configuration of Image Forming Apparatus

An example hardware configuration of the image forming apparatus 100, which is an example of an electronic device, will be described.

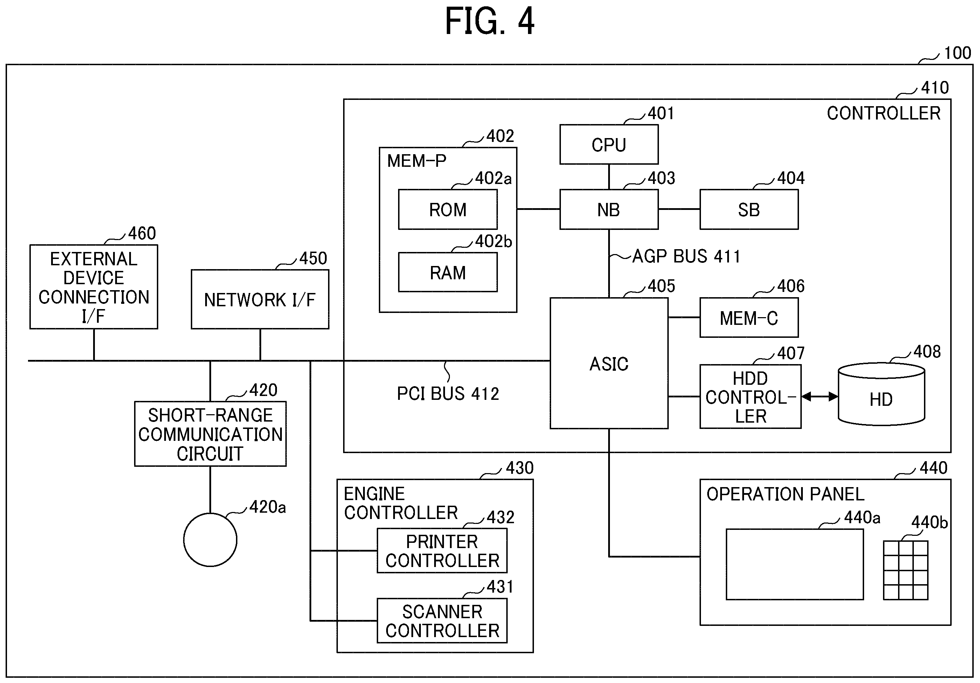

FIG. 4 is a diagram illustrating an example hardware configuration of an image forming apparatus according to an embodiment. As illustrated in FIG. 4, for example, the image forming apparatus 100 includes a controller 410, a short-range communication circuit 420, an engine controller 430, an operation panel 440, a network I/F 450, and an external device connection I/F 460.

The controller 410 includes a CPU 401 as a main processor of a computer, a system memory (MEM-P) 402, a north bridge (NB) 403, a south bridge (SB) 404, an application specific integrated circuit (ASIC) 405, a local memory (MEM-C) 406, an HDD controller 407, and an HD 408. The NB 403 and the ASIC 405 are connected through an accelerated graphics port (AGP) bus 411.

The CPU 401 is an arithmetic device that executes a predetermined program to control the overall operation of the image forming apparatus 100. The NB 403 connects the CPU 401 to the MEM-P 402, the SB 404, and the AGP bus 411. The NB 403 includes a memory controller for controlling reading or writing of various data from or to the MEM-P 402, a Peripheral Component Interconnect (PCI) master, and an AGP target.

The MEM-P 402 includes a ROM 402a as a memory that stores a program and data for implementing various functions of the controller 410. The MEM-P 402 further includes a RAM 402b as a memory that deploys the program and data and as a drawing memory that stores drawing data for printing, for example. The program stored in the RAM 402b may be stored in a computer-readable recording medium, such as a compact disc-read only memory (CD-ROM), a compact disc-recordable (CD-R), or a digital versatile disc (DVD), in an installable or executable file format for distribution.

The SB 404 connects the NB 403 to a PCI device or a peripheral device. The ASIC 405 is an integrated circuit (IC) for an image processing use and including hardware elements for image processing, and connects the AGP bus 411, a PCI bus 412, the HDD controller 407, and the MEM-C 406 to each other. The ASIC 405 includes a PCI target, an AGP master, an arbiter (ARB) as a central processor of the ASIC 405, a memory controller, a plurality of direct memory access controllers (DMACs), and a PCI unit. The memory controller controls the MEM-C 406. The DMACs are capable of, for example, rotating image data with a hardware logic. The PCI unit transfers data to a scanner controller 431 and a printer controller 432 through the PCI bus 412.

The MEM-C 406 is a local memory used as a buffer for image data to be copied or a code buffer. The HD 408 stores various image data, font data for printing, and form data. The HD 408 may store, for example, programs such as an OS, an application, and a device driver, and various data. The HDD controller 407 controls, for example, reading or writing of data from or to the HD 408 under the control of the CPU 401. The AGP bus 411 is a bus interface for a graphics accelerator card, which has been proposed to accelerate graphics processing. Direct access to the MEM-P 402 with high throughput improves the speed of the graphics accelerator card.

The short-range communication circuit 420 is provided with a short-range communication circuit antenna 420a to perform various types of short-range wireless communication. The engine controller 430 includes, for example, the scanner controller 431 and the printer controller 432. The scanner controller 431 is a reading device that reads a document or the like. The printer controller 432 is a printing device that prints print data on a print medium. The scanner controller 431 or the printer controller 432 includes, for example, an image processor configured to perform image processing such as error diffusion or gamma conversion.

The operation panel 440 includes a panel display 440a and an operation key 440b. The panel display 440a is implemented by, for example, a touch panel that displays current set values, a selection screen, or the like to receive an operator input. The operation key 440b includes, for example, a numeric keypad that receives set values of various image forming parameters such as an image density parameter, and a start key that receives an instruction for starting copying. The controller 410 controls the overall operation of the image forming apparatus 100. For example, the controller 410 controls drawing, communication, or user inputs from the operation panel 440.

The network I/F 450 is an interface for performing data communication using a communication network. The external device connection I/F 460 is an interface such as a Universal Serial Bus (USB) interface for connecting an external device to the image forming apparatus 100. The short-range communication circuit 420, the network I/F 450, and the external device connection I/F 460 are electrically connected to the ASIC 405 via, for example, the PCI bus 412.

The electronic device according to this embodiment has the configuration of a computer and includes the network I/F 450, and may have any other hardware configuration.

### Functional Configuration

Next, the functional configuration of the image forming apparatus 100, which is an example of an electronic device including one or more functions, will be described.

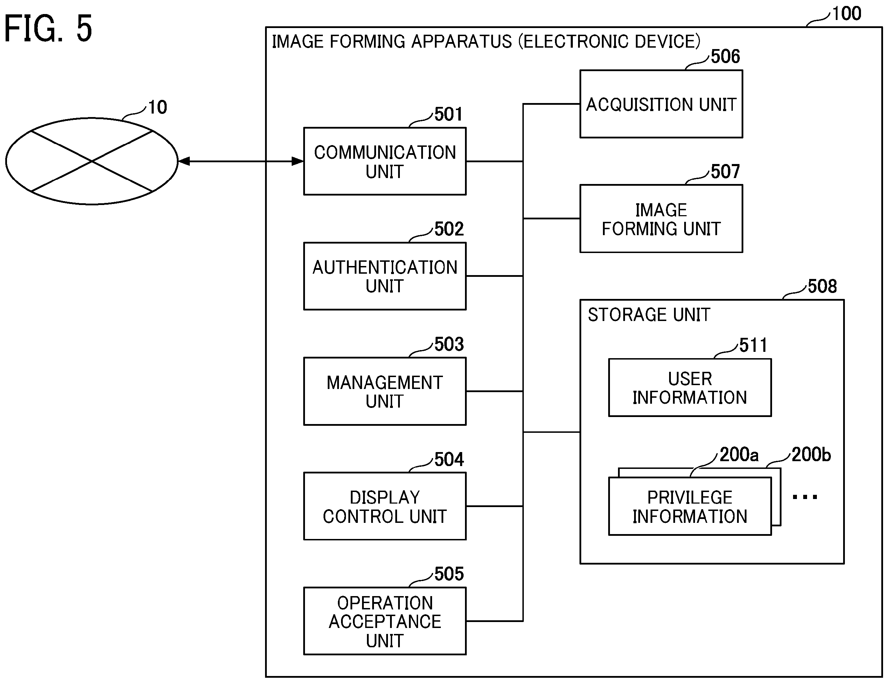

FIG. 5 is a diagram illustrating an example functional configuration of an image forming apparatus according to an embodiment. The image forming apparatus 100 includes one or more computers, and the one or more computers execute a predetermined program to implement a communication unit 501, an authentication unit 502, a management unit 503, a display control unit 504, an operation acceptance unit 505, an acquisition unit 506, an image forming unit 507, and a storage unit 508, for example. At least some of the functional components described above may be implemented by hardware.

The communication unit 501 performs a communication process for connecting the image forming apparatus 100 to the communication network 10 using the network I/F 450 or the like to communicate with another apparatus such as the management server 110.

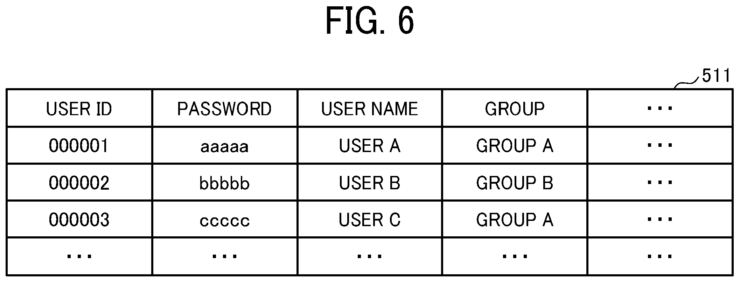

The authentication unit 502 stores and manages, for example, user information 511 illustrated in FIG. 6 in the storage unit 508 or the like and performs an authentication process for authenticating a user who is to log into the image forming apparatus 100.

FIG. 6 illustrates an example of the user information 511 according to an embodiment. In the example illustrated in FIG. 6, the user information 511 includes items of information such as a user ID, a password, a user name, and a group. The user ID is identification information identifying a user. The password is a password corresponding to the user ID. The password is an example of authentication information for authenticating the user, and may be, for example, an electronic certificate, biological information, an access token, or other authentication information.

The user name is information such as the name of the user. The group is information such as a group name of a group to which the user belongs or a group ID for identifying the group. In this embodiment, the group may be any group. In one example, users may be grouped according to a role (privilege) such as a general user, an administrator, a network administrator, or an information system administrator.

For example, the authentication unit 502 uses the display control unit 504 to display a login screen for entering a user ID and a password on the operation panel 440 or the like. When the combination of the user ID and the password entered by the user is stored in the user information 511, the authentication unit 502 permits the user to log in and use the image forming apparatus 100.

For example, the management unit 503 stores and manages, in the storage unit 508, the privilege information 200 illustrated in FIGs. 2A and 2B for each group. Further, the management unit 503 assigns a group to a user who manages or uses the image forming apparatus 100, and applies to the user the privilege information of the group assigned to the user upon the login of the user to the image forming apparatus 100.

For example, the management unit 503 stores privilege information of groups A and B in the storage unit 508 in advance as privilege information 200a and privilege information 200b, respectively. When the user for which the authentication unit 502 has permitted the login is the user A, the management unit 503 refers to the user information 511 illustrated in FIG. 6 and applies to the user A the privilege information 200a of the group A corresponding to the user A.

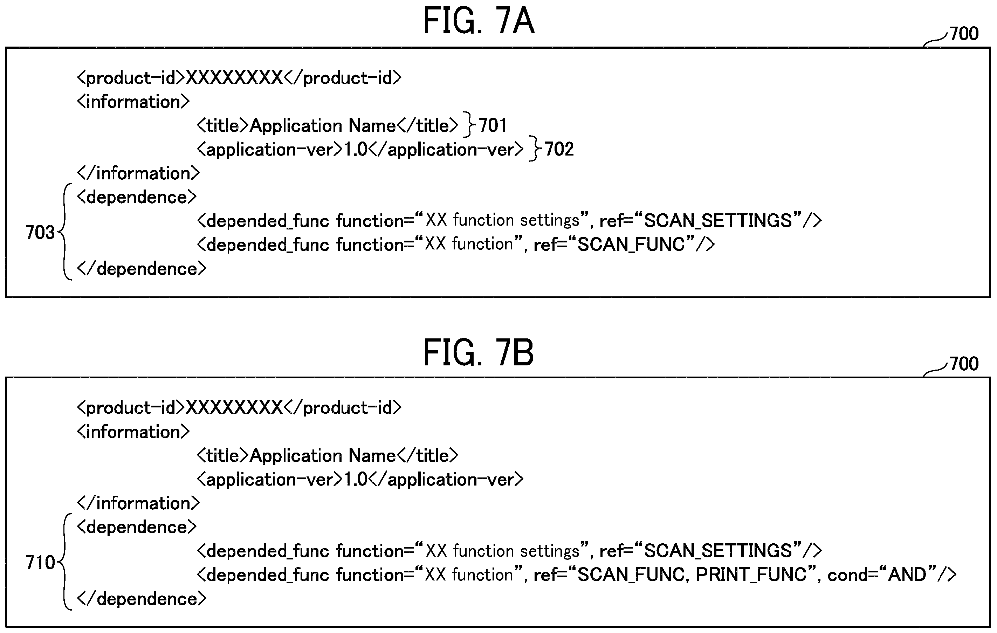

When an additional function is to be added to the image forming apparatus 100, the management unit 503 performs a management process for setting privilege information of the additional function, based on, for example, setting information illustrated in FIG. 7A and privilege information related to the one or more functions of the image forming apparatus 100.

FIG. 7A illustrates an image of an example of setting information 700 according to an embodiment. In the example illustrated in FIG. 7A, the setting information 700 is described in Extensible Markup Language (XML) and includes an application name 701, version information 702, and information 703 on the additional function.

In the information 703 on the additional function, the description "<depended_func function="XX function settings", ref="SCAN_SETTINGS"/>" indicates that the setting privilege for the additional function (XX function) is set according to the setting privilege for the scan function (SCAN_SETTINGS). The description "<depended_func function="XX function", ref="SCAN_FUNC"/>" indicates that the use privilege for the additional function (XX function) is set according to the use privilege for the scan function (SCAN_FUNC).

In this case, as illustrated in FIG. 2B, the management unit 503 sets (e.g., copies) the setting privilege for the "scanner settings" to the setting privilege for the "additional function settings", and sets (e.g., copies) the use privilege for the "scanner function" to the use privilege for the "additional function".

FIG. 7B illustrates another example of the setting information 700 according to an embodiment. In the setting information 700 illustrated in FIG. 7B, information 710 on the additional function references privilege information of a plurality of functions of the image forming apparatus 100. For example, in the information 710 on the additional function, the description "<depended_func function="XX function", ref="SCAN_FUNC, PRINT_FUNC", cond="AND"/>" indicates that the use privilege for the additional function (XX function) is set to be the logical conjunction (AND) of the use privilege for the scan function and the use privilege for the print function.

In this case, the management unit 503 sets the logical conjunction of the use privilege for the scan function and the use privilege for the print function as the use privilege for the additional function. If the setting information 700 includes the description "cond="OR"" instead of the description "cond="AND"", the management unit 503 sets the logical addition of the use privilege for the scan function and the use privilege for the print function as the use privilege for the additional function. As described above, the setting information 700 can reference the use privilege for a plurality of functions of the image forming apparatus 100.

Referring back to FIG. 5, the functional configuration of the image forming apparatus 100 will be described. The display control unit 504 performs a display control process for displaying various display screens on the operation panel 440. In one example, for example, in response to an additional function being added to the image forming apparatus 100, the display control unit 504 displays, on a display screen, the settings of the privilege information of the additional function. For example, the operation acceptance unit 505 performs an operation acceptance process for accepting an input operation on a display screen displayed on the operation panel 440 by the display control unit 504.

When an additional function is to be added to the image forming apparatus 100, for example, the acquisition unit 506 performs an acquisition process for acquiring the setting information 700 illustrated in FIG. 7A or 7B from a predetermined source. For example, in response to installation of an addition program for adding an additional function to the image forming apparatus 100, the acquisition unit 506 acquires the setting information 700 from the addition program or from an installer of the addition program. In another example, when an additional function is to be added to the image forming apparatus 100, the acquisition unit 506 acquires the setting information 700 corresponding to the additional function from the management server 110.

For example, the image forming unit 507 controls the engine controller 430 to perform an image forming process such as printing, scanning, copying, or faxing. The storage unit 508 is implemented by, for example, a program to be executed by the CPU 401 and a storage device such as the MEM-P 402, the MEM-C 406, or the HD 408. For example, the storage unit 508 performs a storage process for storing various types of information such as the user information 511 and the one or more pieces of privilege information 200a, 200b, etc.

The functional configuration of the image forming apparatus 100 illustrated in FIG. 5 is an example. For example, the authentication unit 502 may authenticate the user using an external authentication server or the like. The image forming unit 507 may be any other process execution unit (e.g., an image projection unit or an image capturing unit) according to the functions of the electronic device. The storage unit 508 may store various types of information in, for example, an external storage server, a cloud service, or the like.

### Operation

Next, the operation of the setting management method according to this embodiment will be described.

### First Embodiment

### Privilege Information Setting Process 1

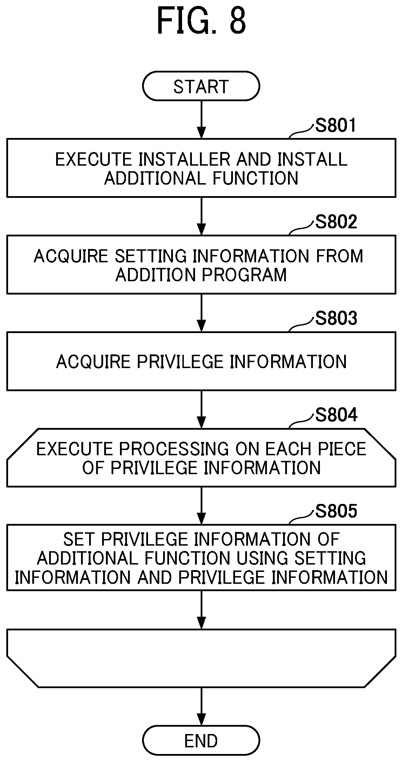

FIG. 8 is a flowchart illustrating an example process for setting privilege information according to a first embodiment. The illustrated process is, for example, an example of a privilege information setting process executed by the image forming apparatus 100 when the administrator or the like who manages the image forming apparatus 100 installs an addition program for adding a function to the image forming apparatus 100. In one example, the addition program to be installed into the image forming apparatus 100 includes, for example, the setting information 700 illustrated in FIG. 7A.

In step S801, for example, when the administrator or the like executes the installer and installs an additional function into the image forming apparatus 100, the image forming apparatus 100 executes the processing of step S802 and the subsequent processing.

In step S802, the acquisition unit 506 of the image forming apparatus 100 acquires the setting information 700 from the installed addition program.

In step S803, the management unit 503 of the image forming apparatus 100 acquires one or more pieces of privilege information 200a, 200b, etc. from the storage unit 508.

In step S804, the management unit 503 executes the processing of step S805 on each of the acquired one or more pieces of privilege information 200a, 200b, etc.

In step S805, the management unit 503 uses the setting information acquired from the addition program and the privilege information of a target to be processed to set privilege information of the additional function according to the addition program.

### Privilege Information Setting Process 2

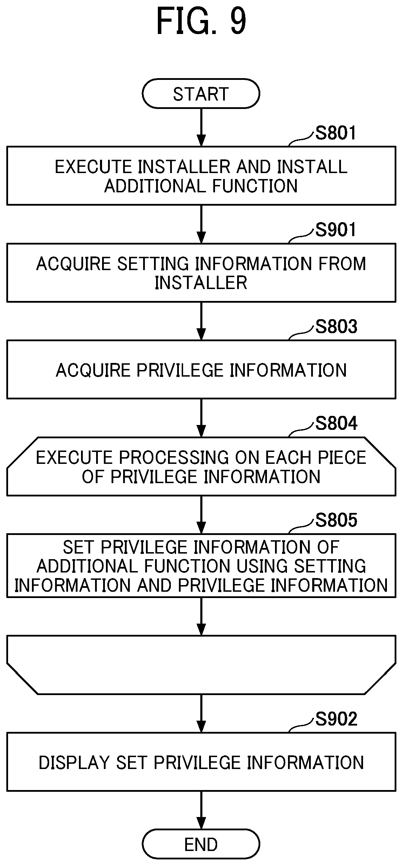

FIG. 9 is a flowchart illustrating an example process for setting privilege information according to the first embodiment. As in FIG. 8, the illustrated process is another example of a privilege information setting process executed by the image forming apparatus 100 when the administrator or the like who manages the image forming apparatus 100 installs an addition program for adding a function to the image forming apparatus 100.

The processing of steps S801 and S803 to S805 illustrated in FIG. 9 is similar to the corresponding processing illustrated in FIG. 8, and the description thereof will thus be omitted.

In step S901, the acquisition unit 506 of the image forming apparatus 100 acquires the setting information 700 from an installer that installs the addition program (e.g., an installation program or an installation package). In this manner, the acquisition unit 506 may acquire the setting information 700 from, instead of the addition program, the installer that installs the addition program.

In step S902, the display control unit 504 of the image forming apparatus 100 displays the privilege information set in step S805. In this manner, the image forming apparatus 100 may display the privilege information of the added function. For example, the image forming apparatus 100 may execute the processing of step S902 in response to the user performing an operation for displaying the privilege information.

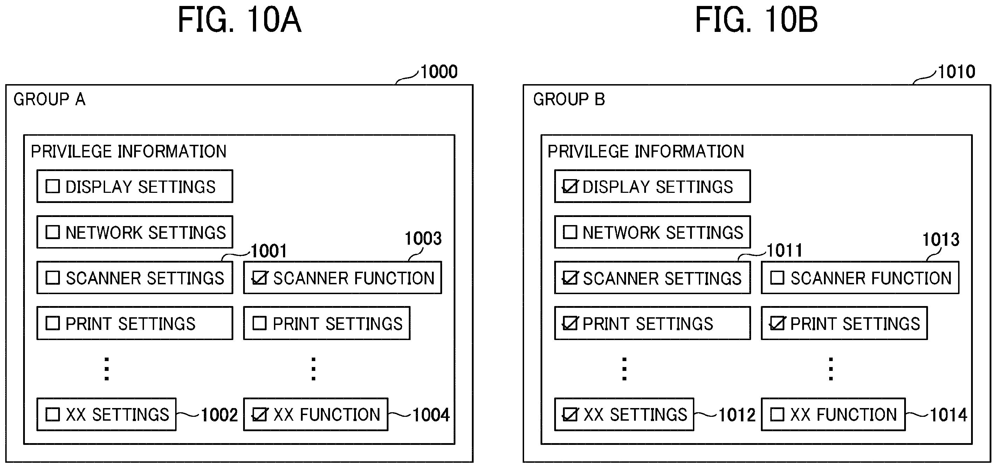

FIG. 10A illustrates an example of a display screen 1000 after the addition of a function. The display screen 1000 is displayed by the display control unit 504 in step S902. For example, in response to a user who belongs to the group A performing an operation of displaying the privilege information, the display control unit 504 displays the display screen 1000 illustrated in FIG. 10A on the operation panel 440 or the like. In the example illustrated in FIG. 10A, based on the setting information 700 illustrated in FIG. 7A, "XX settings" 1002 indicating the setting privilege for the additional function is set in the same manner (the setting privilege not given) as "scanner settings" 1001 indicating the setting privilege for the scanner function. Further, an "XX function" 1004 indicating the use privilege for the additional function is set in the same manner (the use privilege given) as a "scanner function" 1003 indicating the use privilege for the scanner function.

FIG. 10B illustrates another example of the display screen 1000 after the addition of a function, which is displayed by the display control unit 504 in step S902. For example, in response to a user who belongs to the group B performing an operation of displaying the privilege information, the display control unit 504 displays a display screen 1010 illustrated in FIG. 10B on the operation panel 440 or the like. In the example illustrated in FIG. 10B, based on the setting information 700 illustrated in FIG. 7A, "XX settings" 1012 indicating the setting privilege for the additional function is set in the same manner (the setting privilege given) as "scanner settings" 1011 indicating the setting privilege for the scanner function. Further, an "XX function" 1014 indicating the use privilege for the additional function is set in the same manner (the use privilege not given) as a "scanner function" 1013 indicating the use privilege for the scanner function.

As described above, the image forming apparatus 100 according to this embodiment can appropriately set the privilege information of the additional function in accordance with the privilege information set in advance for each group, even based on the same setting information 700.

In step S902, the display control unit 504 may display the display screen 1000 illustrated in FIG. 10A and the display screen 1010 illustrated in FIG. 10B side by side (or on top of each other) on a single display screen, for example. Alternatively, in step S902, the display control unit 504 may display a display screen such that the display screen 1000 illustrated in FIG. 10A or the display screen 1010 illustrated in FIG. 10B can be selected by a tab or the like.

As described above, the first embodiment facilitates setting of the privilege to use a new function in response to the function being added to the image forming apparatus 100 (an example of an electronic device) including one or more functions.

### Second Embodiment

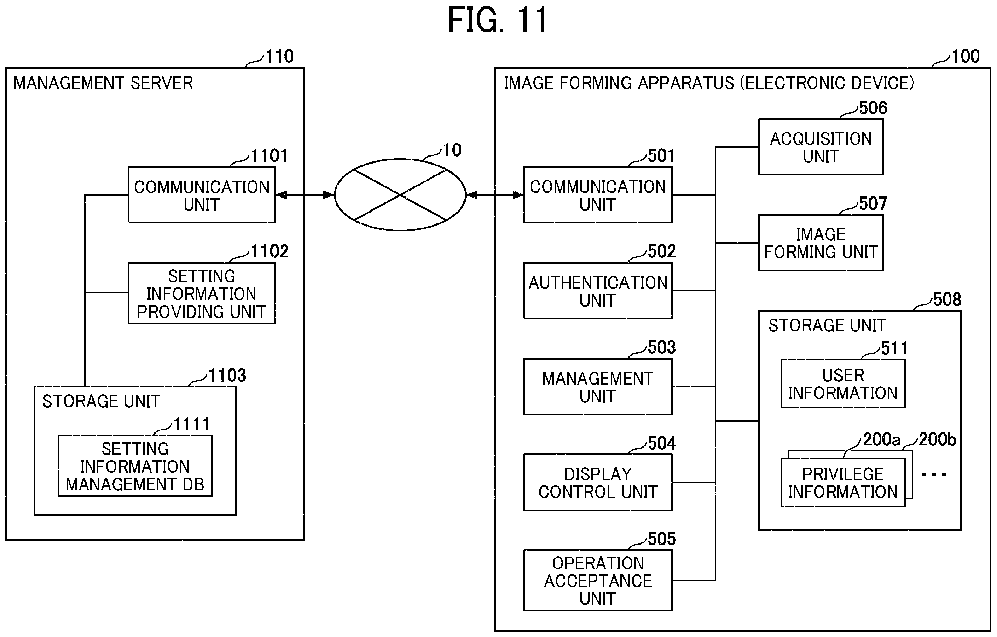

FIG. 11 is a diagram illustrating an example functional configuration of a setting management system according to a second embodiment.

### Functional Configuration of Image Forming Apparatus

An image forming apparatus 100 according to the second embodiment has a functional configuration similar to that of the image forming apparatus 100 according to the first embodiment illustrated in FIG. 5. In the second embodiment, the acquisition unit 506 has a function of acquiring the setting information 700 from the management server 110. The image forming apparatus 100 according to the second embodiment may have the same functional configuration as the image forming apparatus 100 according to the first embodiment, except for the acquisition unit 506.

### Functional Configuration of Management Server

In the management server 110, for example, one or more computers 300 execute a predetermined program to implement a communication unit 1101, a setting information providing unit 1102, and a storage unit 1103, for example. At least some of the functional components described above may be implemented by hardware.

For example, the communication unit 1101 performs a communication process for connecting the management server 110 to the communication network 10 using the network I/F 308 or the like to communicate with another apparatus such as the image forming apparatus 100.

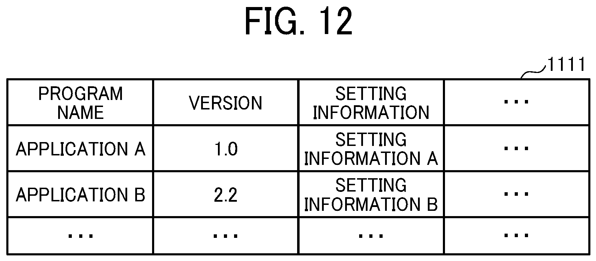

The setting information providing unit 1102 stores and manages, for example, a setting information management database (DB) 1111 illustrated in FIG. 12 in the storage unit 1103 or the like. Further, the setting information providing unit 1102 performs a setting information providing process for providing the setting information 700 in response to a request from an electronic device such as the image forming apparatus 100.

FIG. 12 illustrates an image of the setting information management DB 1111 according to the second embodiment. In the example illustrated in FIG. 12, the setting information management DB 1111 includes items of information such as a program name, a version, and setting information. The program name is information such as the name of the addition program or identification information identifying the addition program. The version is information indicating the version of the addition program. The setting information is the setting information 700 corresponding to the program name and the version or is information indicating the source from which the setting information 700 is acquired, for example.

For example, in response to receipt of a setting information acquisition request including a program name and a version from the image forming apparatus 100, the setting information providing unit 1102 refers to the setting information management DB 1111 and transmits the setting information 700 corresponding to the program name and the version to the image forming apparatus 100.

The storage unit 1103 is implemented by, for example, a program executed by the one or more computers 300, the HD 304, and the HDD controller 305 and stores various types of information such as the setting information management DB 1111.

The functional configuration of the management server 110 illustrated in FIG. 11 is an example. For example, the storage unit 1103 may be implemented by a storage server external to the management server 110, a cloud service, or the like. Further, the management server 110 may further include an addition program providing unit or the like that provides to the image forming apparatus 100 an addition program for adding an additional function to the image forming apparatus 100.

### Operation

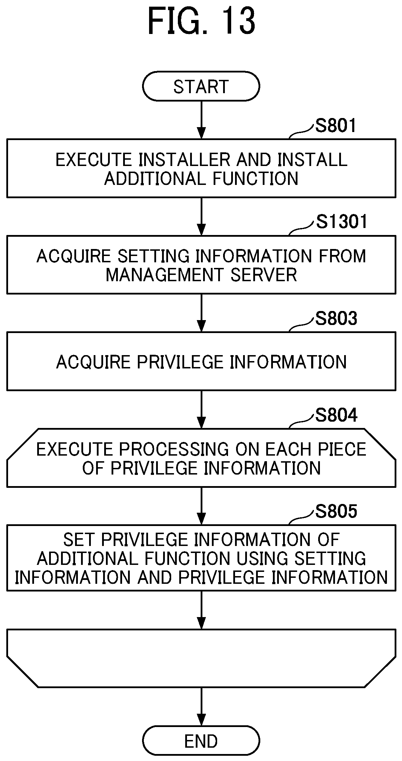

FIG. 13 is a flowchart illustrating an example process for setting privilege information according to the second embodiment. As in the first embodiment, the illustrated process is an example of a privilege information setting process executed by the image forming apparatus 100 when the administrator or the like who manages the image forming apparatus 100 installs an addition program for adding a function to the image forming apparatus 100.

The processing of steps S801 and S803 to S805 illustrated in FIG. 13 is similar to the process for setting privilege information according to the first embodiment illustrated in FIG. 8, and the description thereof will thus be omitted.

In step S1301, the acquisition unit 506 of the image forming apparatus 100 acquires the setting information 700 corresponding to the installed additional function from the management server 110.

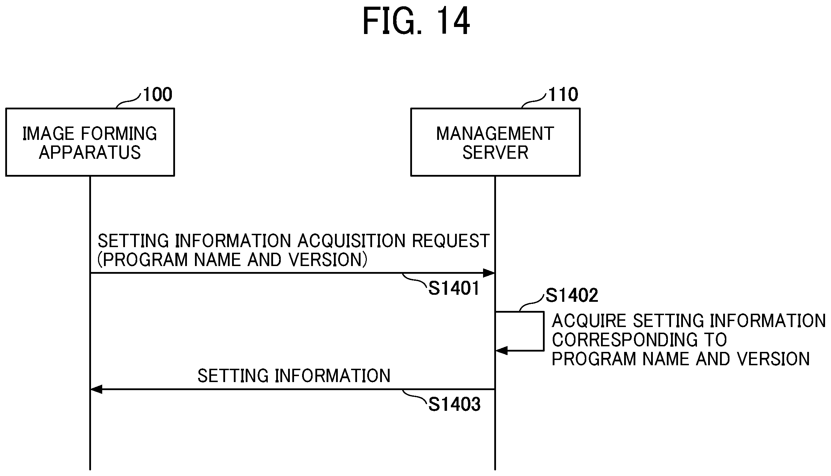

FIG. 14 is a sequence diagram illustrating an example process for acquiring setting information according to the second embodiment. The illustrated process is an example of a setting information acquisition process executed between the image forming apparatus 100 and the management server 110 in step S1301 illustrated in FIG. 13.

In step S1401, the acquisition unit 506 of the image forming apparatus 100 transmits to the management server 110 a setting information acquisition request including the program name and version of the installed addition program. The address information of the management server 110 may be set in the image forming apparatus 100 in advance or may be acquired from the addition program (or an installer of the addition program).

In step S1402, in response to receipt of the setting information acquisition request, the setting information providing unit 1102 of the management server 110 acquires the setting information 700 corresponding to the program name and the version included in the setting information acquisition request. For example, the setting information providing unit 1102 refers to the setting information management DB 1111 illustrated in FIG. 12, and identifies and acquires the setting information 700 corresponding to the program name and the version included in the setting information acquisition request.

In step S1403, the setting information providing unit 1102 of the management server 110 transmits the acquired setting information 700 to the requesting image forming apparatus 100.

Through the process illustrated in FIG. 14, the acquisition unit 506 can acquire the setting information 700 corresponding to the installed addition program from the management server 110.

Referring back to FIG. 13, the flowchart will be described. Through the process illustrated in FIG. 13, as in the first embodiment, the image forming apparatus 100 may easily set the privilege to use a new function in response to the function being added to the image forming apparatus 100 (an example of an electronic device) including one or more functions. The image forming apparatus 100 may execute the processing of step S902 illustrated in FIG. 9 after the process illustrated in FIG. 13.

In the embodiments described above, the electronic device is the image forming apparatus 100, by way of example, but not limitation. Embodiments of the present disclosure are also applicable to various other electronic devices having a communication function.

As described above, embodiments of the present disclosure facilitate setting of the privilege to use a new function in response to the function being added to an electronic device including one or more functions.

Each of the functions of the embodiments described above may be implemented by one or more processing circuits or circuitry. The term "processing circuit" or "processing circuitry" used herein includes a processor programmed to implement each function by software, such as a processor implemented by an electronic circuit, and devices designed to implement the functions described above, such as an ASIC, a digital signal processor (DSP), a field programmable gate array (FPGA), and existing circuit modules.

The functional components of the image forming apparatus 100 may be implemented by a program executed by a plurality of computers (e.g., the controller 410 and a computer included in the operation panel 440) included in the image forming apparatus 100. The functional components of the management server 110 may be implemented by a program executed by a single server device or a program executed by a plurality of computers 300. The functional components of the management server 110 may be implemented by, for example, a program executed by one or more virtual machines in the cloud.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An electronic device (100) including one or more functions, the electronic device (100) comprising:
a storage unit (508) configured to store privilege information related to the one or more functions the privilege information indicating for a user and for each of the one or more functions, whether the user has the privilege to use that function; and
a management unit (503) configured to, in response to addition of an additional function to the electronic device (100), set privilege information of the additional function, based on setting information and the privilege information related to the one or more functions, the setting information being information indicating a correspondence relationship between the privilege information related to the one or more functions and privilege information related to the additional function, wherein the setting information comprises:
information indicating to which function setting privilege, of a plurality of function setting privileges, a privilege to set the additional function corresponds; and
information indicating to which function use privilege, of a plurality of function use privileges, a privilege to use the additional function corresponds.

2. The electronic device (100) according to Claim 1, further comprising
an acquisition unit (506) configured to, in response to installation of an addition program for adding the additional function to the electronic device (100), acquire the setting information from the addition program or from an installer of the addition program.

3. The electronic device (100) according to Claim 1, further comprising:
a communication unit (501) configured to communicate with a management server configured to manage the setting information corresponding to the additional function; and
an acquisition unit (506) configured to acquire the setting information from the management server in response to addition of the additional function to the electronic device (100).

4. The electronic device (100) according to any one of Claims 1 to 3,
wherein the management unit (503) is configured to manage the privilege information related to the one or more functions included in the electronic device (100) on a group-by-group basis.

5. The electronic device (100) according to Claim 4,
wherein the management unit (503) is configured to assign a user who manages or uses the electronic device (100) to a group and apply, to the user, privilege information of the group assigned to the user in response to a login of the user to the electronic device (100).

6. The electronic device (100) according to any one of Claims 1 to 5, further comprising
a display control unit (504) configured to display a setting of the privilege information of the additional function on a display screen in response to the additional function being added to the electronic device (100).

7. The electronic device (100) according to any one of Claims 1 to 6,
wherein the electronic device (100) includes a plurality of functions, and
wherein the setting information indicates a correspondence relationship between privilege information related to the plurality of functions and the privilege information related to the additional function.

8. A system (1) comprising:
the electronic device (100) according to any one of Claims 1 to 7; and
a management server (110) configured to communicate with the electronic device (100) via a network,
the management server (110) including
a setting information providing unit (1102) configured to provide the setting information to the electronic device (100).

9. A method of processing information performed by an electronic device including one or more functions, the method comprising:
storing, in a memory, privilege information related to the one or more functions, the privilege information indicating for a user and for each of the one or more functions, whether the user has the privilege to use that function; and
in response to installation of an addition program for adding an additional function to the electronic device, setting (S805) privilege information of the additional function, based on setting information and the privilege information related to the one or more functions, the setting information being information indicating a correspondence relationship between the privilege information related to the one or more functions and privilege information related to the additional function wherein the setting information comprises:
information indicating to which function setting privilege, of a plurality of function setting privileges, a privilege to set the additional function corresponds; and
information indicating to which function use privilege, of a plurality of function use privileges, the privilege to use the additional function corresponds.

10. A carrier means carrying a computer readable code for controlling a computer system to carry out the method of Claim 9.

## Patentansprüche

1. Elektronische Vorrichtung (100), die eine oder mehrere Funktionen beinhaltet, wobei die elektronische Vorrichtung (100) umfasst:
eine Speichereinheit (508), die konfiguriert ist, um Berechtigungsinformationen zu speichern, die sich auf die eine oder mehrere Funktionen beziehen, wobei die Berechtigungsinformationen für einen Benutzer und für jede der einen oder mehreren Funktionen angeben, ob der Benutzer die Berechtigung zur Nutzung dieser Funktion besitzt; und
eine Verwaltungseinheit (503), die konfiguriert ist, um als Reaktion auf das Hinzufügen einer Zusatzfunktion zu der elektronischen Vorrichtung (100) Berechtigungsinformationen der Zusatzfunktion einzustellen, basierend auf Einstellungsinformationen und den Berechtigungsinformationen, die sich auf die eine oder mehrere Funktionen beziehen, wobei die Einstellungsinformationen Informationen sind, die eine Entsprechungsbeziehung zwischen den Berechtigungsinformationen, die sich auf die eine oder mehrere Funktionen beziehen, und den Berechtigungsinformationen, die sich auf die Zusatzfunktion beziehen, angeben, wobei die Einstellungsinformationen umfassen:
Informationen, die angeben, welcher Funktionseinstellungsberechtigung aus einer Vielzahl von Funktionseinstellungsberechtigungen eine Berechtigung zum Einstellen der Zusatzfunktion entspricht; und
Informationen, die angeben, welcher Funktionsnutzungsberechtigung aus einer Vielzahl von Funktionsnutzungsberechtigungen eine Berechtigung zur Nutzung der Zusatzfunktion entspricht.

2. Elektronische Vorrichtung (100) nach Anspruch 1, weiter umfassend
eine Erfassungseinheit (506), die konfiguriert ist, um als Reaktion auf die Installation eines Zusatzprogramms zum Hinzufügen der Zusatzfunktion zur elektronischen Vorrichtung (100) die Einstellungsinformationen aus dem Zusatzprogramm oder aus einem Installationsprogramm des Zusatzprogramms zu erfassen.

3. Elektronische Vorrichtung (100) nach Anspruch 1, weiter umfassend:
eine Kommunikationseinheit (501), die für die Kommunikation mit einem Verwaltungsserver konfiguriert ist, der für die Verwaltung der Einstellungsinformationen, die der Zusatzfunktion entspricht, konfiguriert ist; und
eine Erfassungseinheit (506), die konfiguriert ist, um die Einstellungsinformationen vom Verwaltungsserver zu erfassen, als Reaktion auf das Hinzufügen der Zusatzfunktion zur elektronischen Vorrichtung (100).

4. Elektronische Vorrichtung (100) nach einem der Ansprüche 1 bis 3,
wobei die Verwaltungseinheit (503) konfiguriert ist, um die Berechtigungsinformationen, die sich auf die eine oder die mehreren in der elektronischen Vorrichtung (100) enthaltenen Funktionen beziehen, auf Gruppenbasis zu verwalten.

5. Elektronische Vorrichtung (100) nach Anspruch 4,
wobei die Verwaltungseinheit (503) konfiguriert ist, um einem Benutzer, der die elektronische Vorrichtung (100) verwaltet oder nutzt, eine Gruppe zuzuweisen und auf diesen Benutzer Berechtigungsinformationen der dem Benutzer zugewiesenen Gruppe als Reaktion auf eine Anmeldung des Benutzers bei der elektronischen Vorrichtung (100) anzuwenden.

6. Elektronische Vorrichtung (100) nach einem der Ansprüche 1 bis 5, weiter umfassend
eine Anzeigesteuereinheit (504), die konfiguriert ist, um eine Einstellung der Berechtigungsinformationen der Zusatzfunktion auf einem Bildschirm anzuzeigen, als Reaktion darauf, dass die Zusatzfunktion zur elektronischen Vorrichtung (100) hinzugefügt wurde.

7. Elektronische Vorrichtung (100) nach einem der Ansprüche 1 bis 6,
wobei die elektronische Vorrichtung (100) eine Vielzahl von Funktionen beinhaltet, und
wobei die Einstellungsinformationen eine Entsprechungsbeziehung zwischen den Berechtigungsinformationen, die sich auf die Vielzahl der Funktionen beziehen, und den Berechtigungsinformationen, die sich auf die Zusatzfunktion beziehen, angeben.

8. System (1) umfassend:
die elektronische Vorrichtung (100) nach einem der Ansprüche 1 bis 7; und
einen Verwaltungsserver (110), der konfiguriert ist, um über ein Netzwerk mit der elektronischen Vorrichtung (100) zu kommunizieren,
wobei der Verwaltungsserver (110) beinhaltet
eine Einheit (1102) zur Bereitstellung von Einstellungsinformationen, die konfiguriert ist, um die Einstellungsinformationen der elektronischen Vorrichtung (100) bereitzustellen.

9. Verfahren zur Verarbeitung von Informationen, das von einer elektronischen Vorrichtung ausgeführt wird, die eine oder mehrere Funktionen beinhaltet, wobei das Verfahren umfasst:
Speichern, in einem Speicher, von Berechtigungsinformationen, die sich auf die eine oder mehrere Funktionen beziehen, wobei die Berechtigungsinformationen für einen Benutzer und für jede der einen oder mehreren Funktionen angeben, ob der Benutzer die Berechtigung zur Nutzung dieser Funktion besitzt; und
als Reaktion auf die Installation eines Zusatzprogramms zum Hinzufügen einer Zusatzfunktion zu der elektronischen Vorrichtung, Einstellen (S805) von Berechtigungsinformationen der Zusatzfunktion basierend auf Einstellungsinformationen und den Berechtigungsinformationen, die sich auf die eine oder mehrere Funktionen beziehen, wobei die Einstellungsinformationen Informationen sind, die eine Entsprechungsbeziehung zwischen den Berechtigungsinformationen, die sich auf die eine oder mehrere Funktionen beziehen, und den Berechtigungsinformationen, die sich auf die Zusatzfunktion beziehen, angeben, wobei die Einstellungsinformationen umfassen:
Informationen, die angeben, welcher Funktionseinstellungsberechtigung aus einer Vielzahl von Funktionseinstellungsberechtigungen eine Berechtigung zum Einstellen der Zusatzfunktion entspricht; und
Informationen, die angeben, welcher Funktionsnutzungsberechtigung aus einer Vielzahl von Funktionsnutzungsberechtigungen die Berechtigung zur Nutzung der Zusatzfunktion entspricht.

10. Trägermittel, das einen computerlesbaren Code zur Steuerung eines Computersystems trägt, um das Verfahren nach Anspruch 9 auszuführen.

## Revendications

1. Dispositif électronique (100) incluant une ou plusieurs fonctions, le dispositif électronique (100) comprenant :
une unité de stockage (508) configurée pour stocker des informations de privilège relatives aux une ou plusieurs fonctions, les informations de privilège indiquant pour un utilisateur et pour chacune des une ou plusieurs fonctions si l'utilisateur a le privilège d'utiliser cette fonction ; et
une unité de gestion (503) configurée pour, en réponse à l'ajout d'une fonction additionnelle au dispositif électronique (100), définir des informations de privilège de la fonction additionnelle, sur la base d'informations de paramétrage et des informations de privilège relatives aux une ou plusieurs fonctions, les informations de paramétrage étant des informations indiquant une relation de correspondance entre les informations de privilège relatives aux une ou plusieurs fonctions et des informations de privilège relatives à la fonction additionnelle, dans lequel les informations de paramétrage comprennent :
des informations indiquant à quel privilège de paramétrage de fonction, d'une pluralité de privilèges de paramétrage de fonction, correspond un privilège de paramétrer la fonction additionnelle ; et
des informations indiquant à quel privilège d'utilisation de fonction, d'une pluralité de privilèges d'utilisation de fonction, correspond un privilège d'utiliser la fonction additionnelle.

2. Dispositif électronique (100) selon la revendication 1, comprenant en outre
une unité d'acquisition (506) configurée pour, en réponse à l'installation d'un programme additionnel destiné à ajouter la fonction additionnelle au dispositif électronique (100), acquérir les informations de paramétrage auprès du programme additionnel ou auprès d'un installateur du programme additionnel.

3. Dispositif électronique (100) selon la revendication 1, comprenant en outre :
une unité de communication (501) configurée pour communiquer avec un serveur de gestion configuré pour gérer les informations de paramétrage correspondant à la fonction additionnelle ; et
une unité d'acquisition (506) configurée pour acquérir les informations de paramétrage à partir du serveur de gestion en réponse à l'ajout de la fonction additionnelle au dispositif électronique (100).

4. Dispositif électronique (100) selon l'une quelconque des revendications 1 à 3,
dans lequel l'unité de gestion (503) est configurée pour gérer les informations de privilège relatives aux une ou plusieurs fonctions incluses dans le dispositif électronique (100) sur une base de groupe par groupe.

5. Dispositif électronique (100) selon la revendication 4,
dans lequel l'unité de gestion (503) est configurée pour attribuer à un groupe un utilisateur qui gère ou utilise le dispositif électronique (100) et appliquer, à l'utilisateur, des informations de privilège du groupe attribué à l'utilisateur en réponse à une connexion de l'utilisateur au dispositif électronique (100).

6. Dispositif électronique (100) selon l'une quelconque des revendications 1 à 5, comprenant en outre
une unité de commande d'affichage (504) configurée pour afficher un paramétrage des informations de privilège de la fonction additionnelle sur un écran d'affichage en réponse à l'ajout de la fonction additionnelle au dispositif électronique (100).

7. Dispositif électronique (100) selon l'une quelconque des revendications 1 à 6,
dans lequel le dispositif électronique (100) inclut une pluralité de fonctions, et
dans lequel les informations de paramétrage indiquent une relation de correspondance entre des informations de privilège relatives à la pluralité de fonctions et les informations de privilège relatives à la fonction additionnelle.

8. Système (1) comprenant :
le dispositif électronique (100) selon l'une quelconque des revendications 1 à 7 ; et
un serveur de gestion (110) configuré pour communiquer avec le dispositif électronique (100) via un réseau,
le serveur de gestion (110) incluant
une unité de fourniture d'informations de paramétrage (1102) configurée pour fournir les informations de paramétrage au dispositif électronique (100).

9. Procédé de traitement d'informations réalisé par un dispositif électronique incluant une ou plusieurs fonctions, le procédé comprenant :
le stockage, dans une mémoire, d'informations de privilège relatives aux une ou plusieurs fonctions, les informations de privilège indiquant pour un utilisateur et pour chacune des une ou plusieurs fonctions si l'utilisateur a le privilège d'utiliser cette fonction ; et
en réponse à l'installation d'un programme additionnel destiné à ajouter une fonction additionnelle au dispositif électronique, le paramétrage (S805) d'informations de privilège de la fonction additionnelle, sur la base d'informations de paramétrage et des informations de privilège relatives aux une ou plusieurs fonctions, les informations de paramétrage étant des informations indiquant une relation de correspondance entre les informations de privilège relatives aux une ou plusieurs fonctions et des informations de privilège relatives à la fonction additionnelle, dans lequel les informations de paramétrage comprennent :
des informations indiquant à quel privilège de paramétrage de fonction, d'une pluralité de privilèges de paramétrage de fonction, correspond un privilège de paramétrer la fonction additionnelle ; et
des informations indiquant à quel privilège d'utilisation de fonction, d'une pluralité de privilèges d'utilisation de fonction, correspond le privilège d'utiliser la fonction additionnelle.

10. Moyen de support supportant un code lisible par ordinateur destiné à commander un système informatique pour mettre en œuvre le procédé selon la revendication 9.
